# EUROPEAN PATENT APPLICATION

(11) **EP 1 422 657 A1**
(43) Date of publication of application: **26.05.2004**
(21) Application number: 02026307.5
(22) Date of filing: 20.11.2002
(51) Int. Cl.: G06K 19/06, G06K 9/46

(54) **Method of detecting the presence of figures and methods of managing a stock of components**

(71) Applicant: Setrix AG, 80807 München (DE)
(72) Inventor: Spindler, Thomas, 74632 Neuenstein (DE); Chiu, Ming-Yee, Princeton Jct, NJ 08540 (US)
(74) Representative: Epping Hermann & Fischer

(57) **Abstract**

A method for detecting multiple Sunshiny markers (601, 602) uses a Hough Transform. At least two vote peaks in the Hough Transform vote plane are associated with a continuous elliptic shape. The Sunshiny pattern can be securely detected in a cluttered background. The detection of multiple Sunshiny patterns provides for various applications, for example, in the field of Kanban monitoring for stocks in a factory or for a local positioning system and other applications.

## Description

### Field of the Invention

The invention refers to a method of detecting the presence of at least two figures in a space wherein the figures have a first portion having a continuos circular shape and a second portion surrounding said first portion having a multitude of radial line segments. The invention refers further to a method of managing stocks of components like KanBan stocks.

### Background of the Invention

An application of the invention is in the field of a barcodable localization system. The system uses a digital camera or other imaging device to read multiple markers attached to the environment. The result of the recognition of markers can be used for many applications. Another application is to monitor Kanban stocks for the control and management of the enterprise resources. When integrated with the ERP (Enterprise Resource Planning) software in factories or warehouses, a just-in-time process can be established without human intervention.

The traditional technique to identify an object is to use a barcode reader to read a 1-D or 2-D barcode attached to the object. These barcodes are designed in such a way that it requires either a person aiming the barcode reader at the barcode label, or a person or a machine bringing the product to a stationary barcode reader. A conventional barcode reader typically reads one barcode at a time and the distance between the reader and the barcode label generally cannot be more than 10 to 15 cm. With a two-dimensional imaging device such as a camera, it is possible to recognize multiple barcodes at random orientation simultaneously. This multiple barcode reading technique was described in the US patent application 20020084330: "Method and apparatus of reading a bar code" by Chiu [Ref. 1] which is included herewith by reference. However, due to the design of the linear barcode, the maximum number of barcodes that can be read in one image is limited. For example, a UPC-A barcode encodes a 12-digit number where each digit is represented by a 7-bit word. With start, stop and guard patterns, an UPC code needs a total of 95 bits. As described in the US patent application 20020084330, it is possible to read the barcode with only two pixels in the image to scan across the narrowest element in the space/bar pattern. In other words, one needs at least 190 pixels along the "bin axis" to read an UPC code. The "bin axis" is the direction where data is encoded. With the requirement of quiet zones on both sides, a barcode needs to occupy at least about 200 pixels in the image to be recognized. If one assumes that the other direction (i.e., the orthogonal direction to the bin axis, called "bar axis") needs 1/4 of the length of the barcode, or 50 pixels, then a maximum of 27 (a 3 by 9 array) properly oriented barcodes can be read by an imaging system with a 640 by 480 pixel resolution.

Conventional two-dimensional barcodes are designed to utilize the 2-D space better, thus the pattern is more compact. Typically a 2-D barcode includes a unique and large pattern so that its location and orientation can be computed. The small "data-dots" around this "localization pattern" are then read. For example, the Maxicode uses a bull eye pattern at the center for localization. US patents 5,637,849 [Ref. 3] and 6,088,482 [Ref. 4] discuss methods to read 2-D barcodes such as this Maxicode. However, due to the small and high density of the "data-dots" of the 2-D barcodes, only a few 2-D barcodes can be read in one image. Therefore, like 1-D barcodes, the reading operation of the 2-D barcodes is also "serialized".

Another method to identify an object is to use the radiofrequency tags, or RFIDs. The reading distance of radio frequency tags can be one to two meters. However, reading of multiple tags at the same time is difficult. Therefore the RFID is also a seralized system.

In many situations, it is desirable to identify multiple objects at a distance and without actually moving the objects. One application is the Kanban stock management, used in almost all factory production nowadays. The basic Kanban concept is that when the number of components for an assembly is below a threshold, it triggers the internal production, or external acquisition of that component. There are established process and devices (e.g., "Kanban bins") in the factory to facilitate this acquisition mechanism. However, currently there is no effective way to automatically monitor the Kanban stocks without human intervention. The process usually involves the scanning of a Kanban card with a barcode reader by a worker.

From the Just-in-Time production concept, it is desirable to count automatically the number of the components that are stored in the production storage shelves. This problem becomes important when the component is expensive and it is acquired from an outside supplier. To implement Just-in-Time, the factory wants to maintain as minimal stocks as possible without requiring the worker to enter the component data (using a barcode reader e.g.) every time the component is removed or restocked. One current solution is to install an Internet webcam looking at the storage shelves and have the supplier monitoring the stocks remotely. However, this solution has several disadvantages. First it opens up the factory communication network and production activity information to an outsider. Second, in some countries, it is not possible to install surveillance cameras on the factory floor due to the privacy concern. Third, the factory is tied somehow to one specific supplier. In case the factory wants to switch to another supplier, the necessary changeover procedures such as network security could be tedious.

The present invention is based on concepts disclosed in US patent application 20020067855: "Method and arrangement for camera calibration" by Chiu et al [Ref. 2]. This document describes a Sunshiny pattern that comprises two sub-patterns. In the center is a black circular disk. Around the central disk are multiple bands, or rings, of bar/space elements arranged in the circle, concentric with the central disk. The data are encoded in the varying widths of the bars or spaces in the circular bands. This width-encoding method can be any barcode symbology used in conventional 1-D barcodes except the start and stop pattern is different in the Sunshiny pattern design. This prior art also describes the use of the Sunshiny pattern to perform automatic camera calibration and the calibration of a large room by viewing multiple coded Sunshiny patterns.

### Summary of the Invention

It is a primary object of the present invention to provide a method for reading multiple markers using an imaging system.

It is another object of the present invention to design several spatially compact markers so that a reading algorithm can be developed to detect and decode multiple markers from an imaging system located at a large distance from the markers.

It is another object of the present invention to develop a processing algorithm to reliably detect the marker in the clustered background, to determine the marker type, to decode the data embedded in the marker, and to extract geometric parameters associated with the spatial relation between the marker and the camera.

It is another object of the present invention to arrange different types of markers and the location of the marker reader so that a "barcodable localization system" that combines the functions of barcode reading and marker localization can be used for many applications.

It is another object of the present invention to use a flexible hardware with integrated wired or wireless communication function for easy deployment of the marker reader.

It is another object of the present invention to arrange different types of markers and the location of the marker reader to continuously monitor the Kanban stocks in the factory to reduce the inventory of factory.

It is another object of the present invention to construct an optical local positioning system using multiple markers and marker reader for the tracking and localization of pallets in the warehouse.

It is another object of the present invention to use the markers and the marker reader to perform the security monitoring of valuable or important objects over a large area.

It is another object of the present invention to use the markers and the marker reader to track and measure the motion of moving persons or moving objects.

It is another object of the present invention to use the markers and the marker reader to perform the photogrammetry function and construct a 3-D model of an existing structure.

It is another object of the present invention to use the markers and the marker reader to enable self-checkout of products without individually scanning of the products in retail stores.

The above and other objects of the present invention are achieved by the features claimed in the appended claims.

The method of reading multiple coded markers according to the invention uses an imaging system located at a large distance from the markers. The marker is designed so that with one single image, many markers can be detected and decoded simultaneously in a clustered environment. The detection algorithm uses a Generalized Hough Transform that accumulates votes from radial edges of the marker pattern. The markers and the marker reader constitute a barcodable localization system that combines the functions of a barcode reader and marker localization system. Using different arrangements, the system can be used to monitor continuously the Kanban stocks in factory, to track the locations of pallets in a large warehouse, construct a 3-D model of an existing structure, and many other applications.

By choosing appropriate design parameters for the Sunshiny pattern, the present invention enables the reading a large number of barcodable markers at a distance and thus opens up many new applications.

### Brief Description of the Drawings

The methods, apparatus, and arrangements for an implementation of the invention are described in connection with the figures in the drawings. The figures show:
- Figure 1: Six types of Sunshiny patterns: (a) R1_D0, (b) R1_D2, (c) R2_D0, (d) R2_D4, and (e) R3_D12 and (f) R2_D4 with a checksum digit, or R2_D5.
- Figure 2: Part 1 of the flow diagram of the processing algorithm.
- Figure 3: Part 2 of the flow diagram of the processing algorithm.
- Figure 4: (a) The ellipse that corresponds to the central black disk of the Sunshiny when viewed at an angle. (b) The sampling of the image intensity along elliptic paths through the data rings of the Sunshiny.
- Figure 5: (a) A Sunshiny reader hardware with an integrated camera. (b) A Sunshiny reader hardware with an USB interface to digital cameras.
- Figure 6: Monitoring of the labelled Kanban stocks on shelf.
- Figure 7: Monitoring of the container-based Kanban using "reverse" Sunshiny patterns.
- Figure 8: Monitoring of the shelf-space Kanban using a "reverse" Sunshiny sheet.
- Figure 9: Monitoring of the shelf-space Kanban through a mirror.
- Figure 10: An Optical Local Positioning System for pallet localization.
- Figure 11: Monitoring of a shelf-space Kanban using light-stripe illumination. (a) Side view. (b) Top view with a light-stripe projector. (c) Image of the light-stripe scene.

### Detailed Description of Embodiments

### 1. Sunshiny Pattern Design

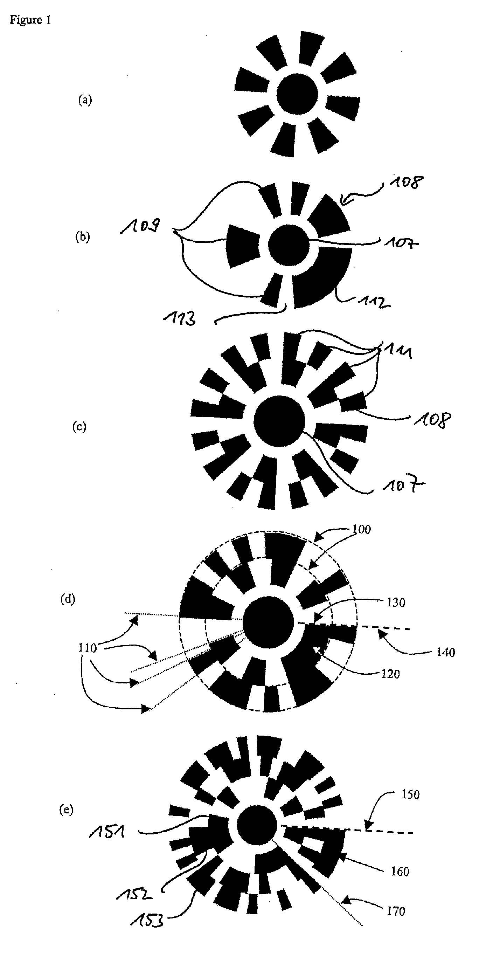

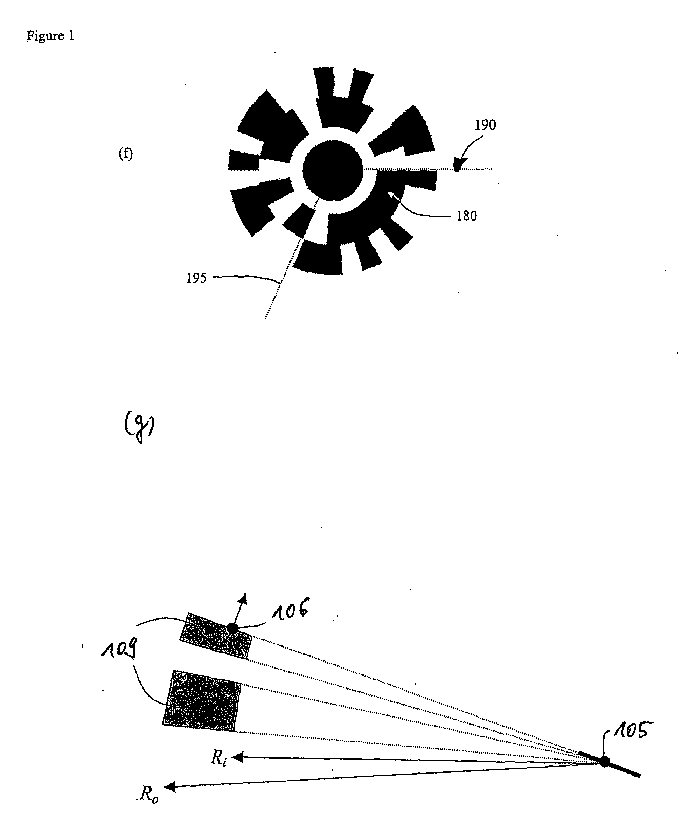

The preferred embodiment includes six types of Sunshiny patterns. The design packs as much information as possible spatially while allows the reliable detection of the pattern and decoding of the data from a large distance. The six types are designated as: (a) R1_D0, (b) R1_D2, (c) R2_D0, (d) R2_D4, (e) R3_D12, and (f) checksum version of R2_D4, or R2_D5, as shown in Figure 1. The number after "R" indicates the number of data rings around the central black disk. The number after "D" indicates the number of characters including digits encoded in the Sunshiny pattern. Thus R3_D12 is a Sunshiny pattern that has a central black disk surrounded by a white band, and then followed by three rings of circular barcodes concentric with the central disk. The alternating bar (i.e. black) and space (i.e. white) elements on any circular data ring encode the barcode data similar to the bars/spaces of the conventional 1-D barcodes. The bar/space elements of a data ring are bounded by two circles 100 along the radial direction and many radial lines 110 along the azimuthal direction. As shown in Figure 1, all Sunshiny patterns have a central black disk and a white ring surrounding the black disk. In the following, a type A Sunshiny pattern refers to all non-coded patterns, e.g. R1_D0 and R2_D0. A type B Sunshiny pattern has two segmented rings with encoded data, e.g. R2_D4 and R2_D5. A type C Sunshiny pattern has three encoded data rings, e.g. R3_D12. A type D Sunshiny pattern has one data ring, e.g. R1_D2.

The present invention uses the same modified Hough Transform, as described in US patent application 20020067855 [Ref. 2], to detect the Sunshiny patterns. The algorithm utilizes the strong edge points of the radials lines 110 bounding the bars/spaces elements to generate a peak in the Hough transform plane for each Sunshiny pattern. The peak corresponds to the center of the black disk that is also the point where all the radial lines intersect. The more edge points of these radial lines 110, the more pronounced of the peak, and therefore the easier the detection of the Sunshiny pattern in the clustered background. Therefore the design of the Sunshiny is to maximize these radial edge points while encode as many data as possible in the pattern.

For Sunshiny types R1_D0 and R2_D0, since there is no encoded data, the data rings consist of alternating and equally spaced black and white elements. In the preferred embodiment, there are 16 space/bar elements in the first ring, i.e. 8 space elements and 8 bar elements, and 32 space/bar elements in the second ring, i.e. 16 space elements and 16 bar elements, as shown in Figure 1(a) and Figure 1(c). Type R1_D0 has fewer radial edge points than R2_D0 when both have the same size (i.e., the same outermost diameter). Thus R1_D0 usually is a smaller pattern and is used where the space is limited. R2_D0 is more reliable in term of detection. Both are used for counting of the items where no identification is needed. Other usage is also possible.

Like R1_D0, type R1_D2 is a small pattern and encodes only 2 numeric digits. It is used also when the space is tight.

The ratio of the circles of Sunshiny patterns is selected in such a way so that the local density of the black and white elements is roughly equal over the entire pattern. There are a maximum of five radii, depending on the types. In the order of from the center outward, the five radii are:
1) Radius of the black disk
2) Inner radius of the first data ring (or the outer radius of the white ring)
3) Outer radius of the first data ring
4) Outer radius of the second data ring
5) Outer radius of the third data ring

In the preferred embodiment, the radius ratio of these five radii is 1 : 1.45 : 2.45 : 3.45 : 4.45. However, for Sunshiny types R1_D0 and R1_D2, because there is only one data ring with radial lines, the number of edge points that contributes to the Hough transform peaks are limited. In this case the radii ratio for these two types can be adjusted to be 0.8 : 1.2 : 1.45. Therefore as shown in Figure 1, R1_D0 and R1_D2 have smaller central disks but longer radial edges than the rest. The Sunshiny patterns can be made in any physical size and they can be printed easily with any laser or inkjet printer. Usually when the Sunshiny is placed at a large distance from the camera, a large size is used. The Sunshiny reader can read the pattern of any size, as long as the size of the Sunshiny image formed by the imaging system is large enough.

The barcode encodes data using varying widths of the bar/space elements. Therefore the length of the barcode is proportional to the number of the numeric digits to be encoded. For Sunshiny patterns, the bar/space pattern is along the perimeter of the circular data rings. In order to maintain the same black and white density over the entire pattern, the encoded numeric digits on each data ring is proportional to the perimeters of the data rings. Since the radii of the central lines of the data "bands" have a ratio of roughly 2 : 3 : 4 (more precisely: 1.95 : 2.95 : 3.95) for the first, second, and third data rings 151, 152, and 153, therefore in the preferred embodiments, 2, 4, and 6 digits are encoded in the first, second and third data rings of R3_D12. For R2_D4, no data is on the first data ring, and only 4 digits are encoded on the second data ring.

The first data ring of R2_D4 is used for the encoding of the "start line" 140 of the data, similar to the start or stop pattern in the linear barcode. Unlike linear barcode that can be read from either direction, the space/bar patterns on the data rings of the Sunshiny pattern are read only in the clockwise direction. However, a starting point of the space/bar pattern must be decided first. For R2_D4, this "start line" 140 is defined at the counterclockwise edge 130 of the widest bar element 120 on the first data ring, as shown in Figure 1(d). This widest bar element has three times the width of other alternating bar/space elements on the same ring. The "width" along the azimuthal direction actually is the angular span along the circle. The total number of bar and space elements on this data ring is 14. Once this radial start line is defined, the space/bar patterns on other data rings can be read starting from this angular start line.

To encode the data, the present invention in a preferred example chooses the "Interleaved 2 of 5" barcode for all Sunshiny types. This barcode has the highest information density in term of characters per inch. It encodes only numeric characters. Each character is represented by five elements, two wide and three narrow. It is called a "two-level" code because only two widths are used. The element pattern of the first character is interleaved with the element pattern of the second character. Therefore it earns the name of "Interleaved 2 of 5". For example, the ASCII characters 7 and 1 are represented as patterns 00011 and 10001 respectively, where 0 is a narrow element and 1 is a wide element. Therefore number 71 is represented as 0100001011. The underlined bits belong to character 7. These bits are all colored black (or bar elements) while the bits of the second character are colored white, or are space elements. Because of this interleaving, there is no inter-character element between characters, but the code must have an even number of characters. The ratio of the widths of the wide and narrow elements is arbitrary. In the preferred embodiment, this ratio is selected to be 2.5 : 1. If the width of the narrow element is represented as w, then each character has a width of 8w and the complete circle has a total width of 32w. Therefore the narrow element has an angular span of 11.25° and the wide element 28.125°.

Based on the above description, one can read the binary pattern on the second data ring in Figure 1(d), starting from the start line 140, as
0110001001 1000001101.

By separating the interleaved bits, the patterns for the first and second character pattern are 01010 and 10001. The third and fourth characters are 10010 and 00011. This is the number 9187.

Another variation of type R2_D4 is to add a checksum character to ensure the integrity of the data. This extra character and the "start line" element are encoded in the first data ring as shown in Figure 1(f). The checksum number is computed using the standard method used by the Interleaved 2 of 5 barcode or the UPC/EAN barcode. The "start line" element 180, which is a black bar, has a width of 5*w*. The "start line" 190 is located at the counterclockwise edge of the "start line" element 180. To encode one digit using the Interleaved 2 of 5 bar code, we interleave the digit's element pattern with a dummy 00000 bit pattern. This way, the number of edge points that contributes to the Hough Transform peak is maximized. Since the alternating bar/space pattern must have an even number of elements (circular), so a white element of width *w* (i.e., bit 0) is inserted after the "start line" element. This means that the code actually starts from the "code line" 195. To summarize, the first data ring for this checksum version of R2_D4 has the bar/space pattern of
(start_line_element)0u0v0x0y0z0
where uvxyz is the bit pattern for the checksum character. If the checksum character is not needed, then this design can be used to encode 5 digits, or becomes "R2_D5" in case 5 numbers is preferred over 4 numbers.

For Type R3_D12, as shown in Figure 1(e), the start line 150 of the Sunshiny is defined as the counterclockwise edge of the widest element 160 on the third data ring. If *w* is the width of the narrow element of this ring, then this "start line" element has a width of 5*w*. Since the wide elements of the Interleaved 2 of 5 bar code has a width of 2.5*w*, it is easy to locate this "start line" element. Because the Interleaved 2 of 5 bar code must start with a bar element, a space element of width *w* immediately follows the "start line" element in clockwise direction. Therefore the code actually starts from the "code line" 170, as shown in Figure 1(e). Since one start line is sufficient for reading the bar/space patterns on all three data rings, the angular space between the start line 150 and the code line 160 for the first and second data rings is filled with 2 and 4 alternating bar/space elements respectively, all having the width of *w*. Therefore, the total widths of the first, second and third data ring of R3_D12 are 18w, 36w, and 54w respectively.

For R3_D12, the encoding order of the data are that the first two characters are in the first data ring, the next four characters in the second data rings, and the last six characters in the third data rings.

For R1_D2, as shown in Figure 1(b), the encoding is very similar to the third ring of R3_D12. First a long bar element 112 of width 5*w* is used as a "start line" element. It is followed by a space 113 of width *w*. Then two digits are encoded.

It is obvious that many other types of Sunshiny patterns can be designed. For example, it is straightforward to design a R4_D20 Sunshiny marker by adding a fourth data ring encoding an additional 8 numeric digits, thus bringing the total encoded characters to be 20. For alphanumeric data, other linear barcode symbology can be used. For example, Code 39 is also a two-level code and thus the design of Sunshiny pattern using Code 39 is straightforward.

### 2. Reading Sunshiny Patterns

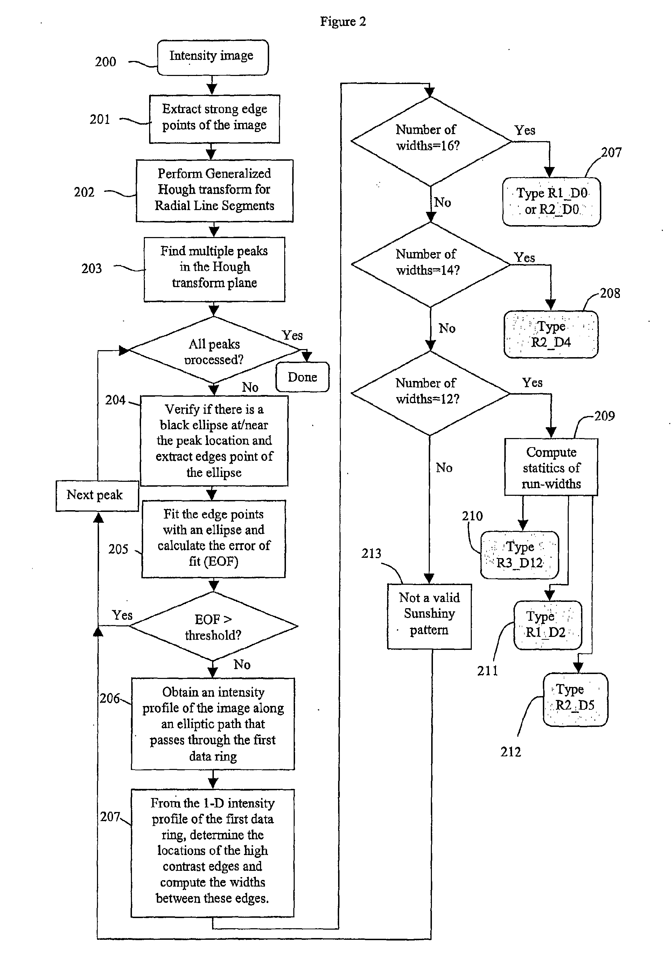

Referring to Figure 2, it shows a flow diagram illustrating the operation of a preferred embodiment of the algorithm which is advantageously able to read multiple Sunshiny patterns according to the present invention. The input is a 2-D intensity image 200 captured from a digital camera or video camera. The scene may consist of a mixture of all six types of Sunshiny patterns in a clustered background. Some Sunshiny patterns can be large and some small. Some can be positioned at a large oblique angle with respect of the optical axis of the camera. The algorithm first detects all potential Sunshiny patterns, then it verifies if they are indeed the Sunshiny patterns by checking if there is a black ellipse at the pattern's center. The elliptic shape is the result of the oblique angle between the Sunshiny pattern and the camera axis. Based on the bar/space pattern of the first data ring of the individual Sunshiny, the algorithm then determines the type of the Sunshiny and decodes the data accordingly.

Step 201 performs two 3x3 Sobel operations in the x- and y-direction to extract the x-gradient and y-gradient of the image. Then the gradient magnitude is computed. Those points whose gradient magnitude exceeds a threshold are identified. These points are the "strong edge points" of the image.

Step 202 uses the same Generalized Hough Transform (GHT) for Radial Line Segments (RLS), as described in US patent application 20020067855 [Ref. 2], to locate each of the Sunshiny patterns. The Radial Line Segments correspond to the radial lines 110 of the Sunshiny patterns, shown in Figure 1(d). For each strong edge point, two uniform line segments of votes with a distance of Rᵢ to Rₒ from the strong edge point, is deposited on a "vote accumulated plane", or "Generalized Hough Transform plane". Rᵢ and Rₒ correspond to a number in the unit of pixels in the recorded image. The GHT plane shares the same coordinate system as the image plane. This line of vote on the GHT plane is normal to the gradient direction of the edge point on the image plane. The two vote segments are located at either side of the edge points. The two distances Rᵢ and Rₒ are chosen so that all the strong edge points that lie on the edges of radial lines 110 contributes a vote at the center of radial lines and thus create a peak there. Only vote segments on one side of the edge points accumulate at the Sunshiny center. The other segments are spread on an outside circle. Usually Rᵢ is selected as a number that is 75% of the inner radius of first data ring of the smallest Sunshiny in the image and R₀ is selected as a number that is 125% of the outer radius of the outermost data ring of the largest Sunshiny in the image. However, in case that the range of Rᵢ to Rₒ is too large, the quality of peaks in the Hough Transform plane will be degraded. In this case a broad peak instead of a narrow and high peak would be obtained. In this case, several Hough Transform planes, each corresponds to different radial range can be used. This method is described also in US patent application 20020067855 [Ref. 2].

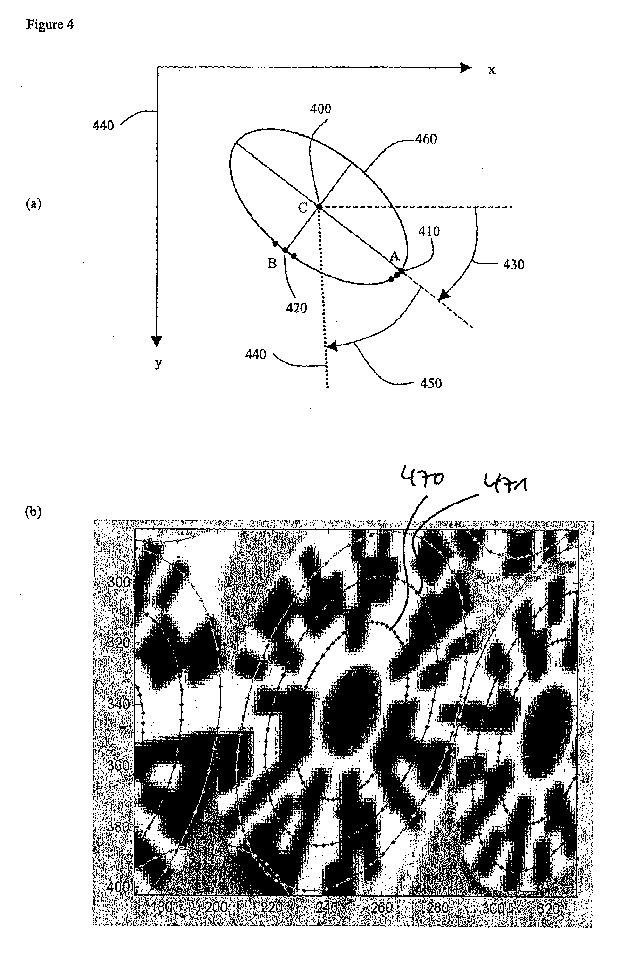

As mentioned in US patent application 20020067855 [Ref. 2], this Generalized Hough Transform method also works quite well for a Sunshiny pattern that is oriented at an oblique angle as large as 45 - 60 degrees. In this case, the radial segments 110 in Figure 1(d) are compressed along the minor axis of the elliptic-shape Sunshiny (see also Figure 4(b)). However, as long as there are sufficient numbers of vote line segments intersect at the center, the peaks can be detected reliably.

Step 203 uses an iterative procedure to find all potential peaks in the GHT plane. These peaks are called "GHT peaks" to indicate that the peak refers to the maximum vote in the GHT plane. First, the absolute maximum of the vote Vₘₐₓ in the GHT plane is located. The quality of this GHT peak is computed. If the vote intensity and the quality of the peak both exceed the certain thresholds, then this peak is determined to correspond to the first potential Sunshiny pattern. Otherwise, the image has no Sunshiny present. There are many ways to define the quality of the peak. In the preferred embodiment the quality is defined as the ratio of the peak vote and the average vote around the peak excluding the peak core region. In other words, the average region is a larger square area with a size of Dₒ by Dₒ pixels excluding a smaller square area with a size of Dᵢ by Dᵢ pixels. Both Dᵢ and Dₒ depend on Rᵢ and Rₒ.

A minimum threshold vote Vₜₕᵣₑₛ is then defined as a percentage of the absolute maximum vote Vₘₐₓ. The votes in the excluding square region around the first peak are then set to zero. Step 203 then repeats the peak finding process by locating the next absolute maximum of the modified vote image. If the next vote maximum exceeds the minimum threshold Vₜₕᵣₑₛ and the quality also exceeds a quality threshold, this peak is considered as a potential Sunshiny and the process repeats. Otherwise the process stops. By this method any local maxima in the Hough Transform plane are determined.

The algorithm then processes each peak one at a time. Step 204 verifies if there is a black ellipse at or near the GHT peak location. The Sunshiny pattern, which is circular if viewed normally, becomes an elliptic shape if there is a large angle between the optical axis of the camera and the normal to the Sunshiny plane. Therefore the verification step 204 checks if the central black disk is an ellipse, where a circle is a special case. First, an image intensity threshold Iₜₕᵣₑₛ is computed based on the local region around the peak. In the preferred embodiment, Iₜₕᵣₑₛ = Iₘᵢₙ*2/3 + Iₘₐₓ/3, where Iₘᵢₙ and Iₘₐₓ are the local minimum and maximum image intensity. Then, Step 204 checks if image intensity at the GHT peak is less than Iₜₕᵣₑₛ. If not, the peak is not located inside a black disk and the process goes to the next GHT peak. If yes, the algorithm tries to find the edge points of the black ellipse as follows. From the peak location, the image intensity along the lines of sixteen directions, equally spaced in 360°, is compared with the intensity threshold Ithres. This directional checking continues until it reaches a pixel whose image intensity exceeds the intensity threshold Iₜₕᵣₑₛ. This point is then an edge point of the black ellipse. If no pixel with intensity larger than Iₜₕᵣₑₛ is found after checking Rₒ pixels from the peak location, or if the pixel hits the image border first, then this peak is not considered as a valid Sunshiny and the process goes to the next peak. Rₒ is a radius larger than the radius of the entire Sunshiny, thus if this GHT peak corresponds to a Sunshiny, the intensity checking from the peak location must reach a bright pixels in a distance shorter than Rₒ pixels because there is a white ring around the central black disk. Thus at the end of Step 204, sixteen edge points around the peak location are obtained.

Step 205 then fits the 16 edge points with an ellipse equation. The fitting must be precise because the Sunshiny pattern and the algorithm are designed to read the pattern even with a viewing angle of 45 - 60 degrees. One well-known direct ellipse fitting method is by Pilu et al. [Ref. 5]. This fitting algorithm is robust and numerically stable. To make sure that the edge points do correspond to an ellipse, an Error of Fit (EOF), based on the geometric distance between the fitted ellipse and the edge points, is computed. If the EOF is greater than a threshold, the GHT peak is not a Sunshiny and the process goes to the next peak. Otherwise, each qualified peak now has a more precise ellipse center that corresponds to the location of the Sunshiny pattern. The orientation of the ellipse with respect to the x-axis, and the major and minor radii of the ellipse are also extracted. As shown in Figure 4(a), the center 400 of the central ellipse 460 of the Sunshiny pattern is located in the image coordinate system 440. Numeral 430 denotes the angle of the ellipse. The major axis is along the line CA and the minor axis is along the line CB. The major radius CA is greater or equal to the minor radius CB.

Step 206 extracts the image intensity profile along an elliptic path that passes through the first data ring. This is shown in Figure 4(b), which is a blow-up image of a R3_D12 Sunshiny pattern. The sixteen edge points of the black central disk are marked with "+". Three elliptic sampling paths through three data rings are also shown. Since the ratio of the radii of the central disk and the data rings are known, the elliptic path of the data rings can be determined by multiplying the major and minor radius of the fitted ellipse with the fixed ratio. The sampling angles are equally spaced in the circular coordinate; therefore they are not equally spaced in the actual image coordinate. This is illustrated in Figure 4(a) where the sampling points near point A, or 410, are closely spaced while those sampling points near B, or 420, are sparsely spaced. This effect can also be seen in Figure 4(b). Mathematically, this non-uniform sampling in the image space is equivalent to the uniform sampling when the Sunshiny is transformed to a circular shape. With this sampling, the relation of the widths of the bar/space elements in the data rings can then be preserved, independent of the oblique angle of the Sunshiny pattern. The image intensity at the sampling point is computed by using bilinear interpolation.

It is very important that the sampling of the intensity profile of data rings all starts from the same angle, which normally is the major axis and the sampling runs clockwise in the example. The total number of the sampling points is also the same for all data rings so that the angular correspondence between different data rings can be established.

In case the sampling path of the first data ring hits the image border, the GHT peak is counted as one Sunshiny pattern and a special code such as "data-ring-touches-border" is stored for this peak. This information can be used for some applications. In this case, no further processing is performed for this peak and the process goes to the next GHT peak.

Due to many noise factors, the ideal major and minor radii of the elliptic path computed based on the ideal fixed radii ratio between various rings may not pass through the actual data rings of the image. Therefore, the algorithm tries several intensity samplings along elliptic paths for the same data ring. These samplings usually use elliptic paths that are a few pixels larger or smaller than the ideal path while keeping the ratio of the major and minor radii the same. This multiple-profile sampling applies to all data rings until a valid Sunshiny barcode is decoded. If the decoding fails for all intensity profiles tried, then a "decoding-fails" code is stored for this GHT peak.

The 1-D intensity profile obtained now represents the bar/space pattern of each of the data rings of the Sunshiny pattern. Step 207 then extracts the location of the high contrast edges of the first data ring. These edges correspond to the transition from the bar element to the space element or vice versa. This 1-D intensity profile is similar to that obtained from the scanning of the conventional linear barcode with two differences. First, the intensity profile is sampled in angular coordinate; therefore the profile is a wrap-around function. Second, there is no quiet zone in the 1-D profile. To extract the bar/space edges, this 1-D profile is duplicated once to make a function that is two times as long as the original. Then the high contrast edge extraction method used in Step 160 of Figure 1 in the US Patent Application 20020084330 [Ref 1] which is incorporated by reference herein is applied to this expanded 1-D profile. Since the entire expanded profile function corresponds to 720 degrees, two high contrast edges separated by 360 degrees can be selected. Between these two edges are a number of runs that correspond to the alternating bar and space elements of the data ring. The widths of these runs are then computed and the number of the runs within 360 degrees is also determined. Note that the run-widths are ordered clockwise.

From the design of the Sunshiny, we know that the numbers of bar/space elements of the first data ring are 16, 12, 16, 14, 12, 12 for type R1_D0, R1_D2, R2_D0, R2_D4, R3_D12, and R2_D5, respectively. Therefore if the number of run-widths is equal to 16, 14, or 12, the process goes to Step 207, 208, or 209, respectively. The processing for R1_D0 and R2_D0 is the same since these Sunshiny patterns are meant for counting only. Step 209 differentiates the R3_D12, R1_D2 and R2_D5 types by using the statistics of the run-widths of the first data ring. The first data ring of R3_D12 has four elements with width 2.5*w* and eight elements with width *w*. The first data ring of R1_D2 has one long element with width 5*w*, 7 elements with width *w* and 4 elements with width 2.5w. The first data ring of R2_D5 has one long element with width 5*w*, 9 elements with width *w* and 2 elements with width 2.5*w*. The width *w* can be computed by averaging the run-widths of the lowest half of the runs since all data rings have at least half of the runs with a width of *w*. Based on the run-width checking of Step 209, the processing then goes to Step 210, 211 or 212.

When the number of run-widths of the first data ring is not 16, 14 or 12, then the peak is not a valid Sunshiny pattern, as shown in 213 and the process goes to the next GHT peak. There are two cases this can happen. The first case is that a "Radiation warning symbol" [Ref 6] just happens in the image. This radiation-warning symbol is essentially a one-ring Sunshiny pattern with 6 equally spaced alternating magenta and yellow color elements. The second case that this can happen is when an object blocks the first data ring of the Sunshiny pattern.

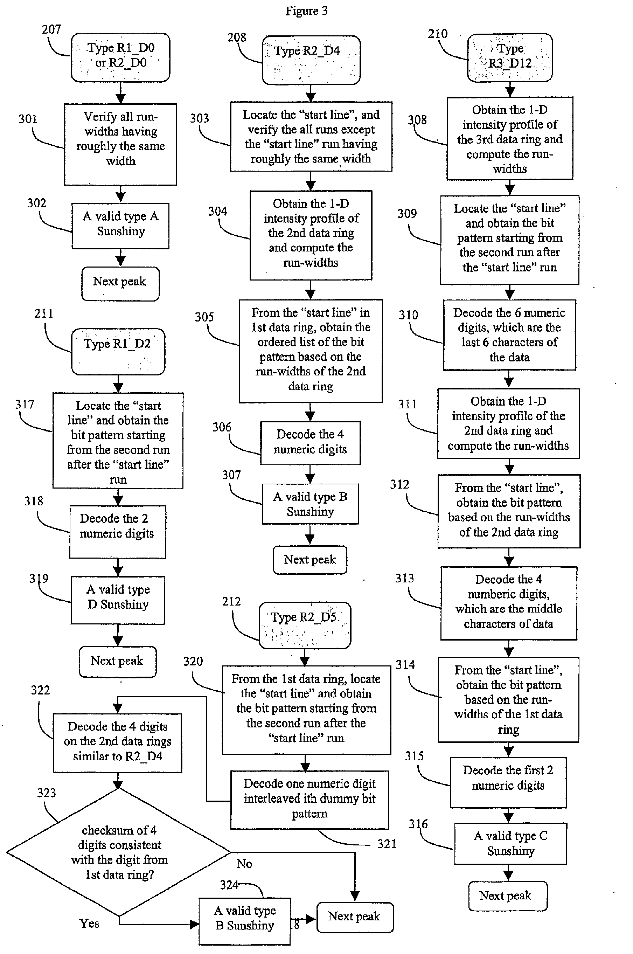

Figure 3 continues the processing flow for each Sunshiny type. For type R1_D0 or type R2_D0, Step 301 verifies if all run-widths have roughly the same width by computing the minimum, maximum and average of the run-widths. If the difference between the max and min widths is greater than the average width, then the GHT peak is not a valid Sunshiny pattern. Otherwise, the peak is labeled as a type A Sunshiny 302. Note that the second data ring of R2_D0 is not processed.

For type R2_D4, Step 303 finds the "start line" element in the first data ring by finding the run with the largest run-width. The angular position of the "start line" is then computed at the counterclockwise edge of the "start line" run. Step 303 also checks if the width of the "start line" run (width 3*w*) is at least two times the width of the remaining run-widths and the remaining run-widths have roughly the same run-widths (Step 301). Then Step 304 extracts the 1-D intensity profile of the 2^{nd} data ring and computes the corresponding run-widths. From the start line computed in Step 303, Step 305 obtains the ordered list of bit pattern using the run-widths of the 2^{nd} data ring. If the run-width is less than a width threshold, a bit of 0 is assigned. Otherwise a bit 1 is assigned. To compute the width threshold, the run-widths are sorted in ascending order and then an average the first half of the sorted run-widths is computed. This average is roughly equal to *w* described in previous section since the number of narrow elements exceeds half of the runs in all data rings that encodes the data. The width threshold is then equal to a number, such as 1.75, multiplies by this average width. Step 306 then decodes the 4 numeric digits using the symbology of the Interleaved 2 of 5 bar code. If decoding is successful, a valid type B Sunshiny is assigned to this GHT peak. Note that the angular position of the "start line" 440, as indicated in Figure 4(a), is characterized by an angle 450 from the major axis of the ellipse to the start line. This information, which indicates the rotation angle of the Sunshiny pattern in the pattern plane, is useful for some applications.

For type R3_D12, Step 308 extracts the 1-D intensity profile of the 3^{rd} data ring and computes the run-widths. Step 309 then finds the longest run which is the "start line" run. The angular position of the "start line" is then recorded and the bit pattern of the data on the 3^{rd} data ring starts from the second runs after the "start line" run. This code-start line is indicated at the "code line" 170 in Figure 1(e). Step 310 decodes the 6 digits, which becomes the last six digits of the data. The algorithm then proceeds to decode the data in data ring 2 (Steps 311-313) and data ring 1 (Step 314-315) using the "code line" 170 to extract the bit pattern. When the decoding of all 12 digits is successful, a valid type C Sunshiny is assigned and the process goes to the next peak.

For type R1_D2, the processing is similar. Step 317 locates the "start line" which is at the counterclockwise edge of the longest run. The bit pattern then starts from the second run after the "start line" run. If the decoding is successful in Step 318, a valid type D Sunshiny is then assigned.

For type R2_D5, or the checksum version of R2_D4, Step 320 locates the "start line" from the longest run in the first data ring. The bit pattern are then extracted starting from the second run after the "start line" run. Step 321 then decodes the single digit by using half of the bit pattern since the other bit pattern is a dummy 00000 pattern. Step 322 proceeds to decode the 4 digits from the 2^{nd} data ring, similar to the processing for R2_D4. Step 323 then checks if the checksum of the 4 digits from the 2^{nd} data ring is consistent with the single digit from the 1^{st} data ring. If it is, a valid type B is assigned 324. Otherwise, the process goes to the next peak directly.

During the intensity profile sampling of the data ring 2 or 3, if the elliptic path hits the image border, as before, a special code "data-ring-touches-border" is stored for the corresponding GHT peak.

In summary, for each Sunshiny pattern recognized, the reader stores the x- and y- position of the Sunshiny pattern, and the major and minor radii of the ellipse. The ratio of the major radius and minor radius determines the tilt angle between the normal direction of the plane of the Sunshiny pattern and the optical axis of the camera. For Sunshiny types that encode the data, two additional data is extracted. One is the encoded number; the other is the angle of the "start line" (450 in Figure 4(a)), which corresponds to the angular rotation of the Sunshiny pattern in its pattern plane. In some applications, this angle can be used to measure the local rotation of the object that the Sunshiny pattern is attached to.

### 3. Sunshiny Reader with Communication Function

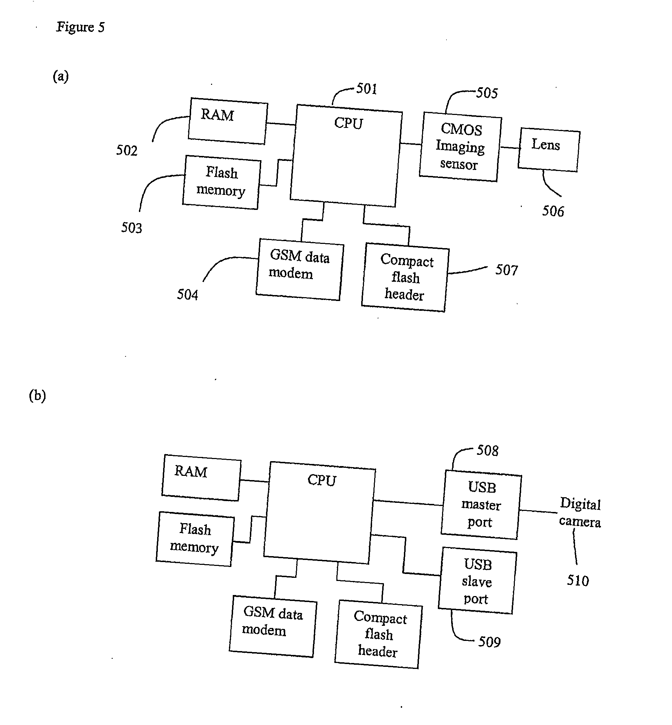

A personal computer or PDA (Personal Digital Assistant) equipped with a USB connected camera and the Sunshiny reading software as described above can become a Sunshiny reader. However, in many applications that will be discussed later, the Sunshiny reader needs to be installed at locations such as a ceiling or a mobile platform. In these cases, a compact device with integrated communication fucntion would be more deployable. One preferred embodiment of the present invention is shown in Figure 5(a). The system has a CPU 501 with a configurable amount of RAM 502 and non-volatile flash memory 503. It also integrates a wireless GSM data module 504 for WAN connection and a compact flash header slot 507. Either a wired Ethernet compact flash card or a wireless 802.11b card can be inserted to the compact flash slot for LAN connection. For image capture, a 2-D CMOS imaging sensor 505 and an imaging lens 506 performs the imaging fucntion. Another embodiment of the present invention is shown in Figure 5(b). This cofiguration does not have an integrated imaging sensor. However, it integrates a USB master port 508 so that any commercial USB digital camera 510 can be interfaced to the system. It also include a USB slave port 509 so that the system can be a USB slave of another computer. Commercial digital cameras can provide images with a resolution as high as 4 Meg pixels or more.

### 4. Application: Continuous Kanban Stock Monitoring

As mentioned earlier, one application of the Sunshiny system is for the Kanban stock management. Besides the traditional 2-card and 1-card Kanban, most factories have adapted three variants of Kanban: 1) Floor grid Kanban, 2) Container-based Kanban, and 3) Shelf-space Kanban. The present invention describes arrangements and systems for the continuously monitoring of these Kanban stocks without human intervention or any change to the existimg production processes.

Floor grid Kanban typically is used for bulky or heavy components that normally are placed collectively in one area on the shop floor. These components usually are expensive and therefore only a small number of components are kept in the factory. Therefore it is feasible to attach a Sunshiny pattern encoded with a unique ID on the top of each component. A Sunshiny reader can then be mounted on the ceiling and look directly down to monitor the entire Kanban area continuously. Any removal or replenishment of the stock can be detected immediately and the information be fed into the ERP (Enterprise Resource Planning) system. When the stock is below a threshold, a requisition order can be generated automatically and emailed to the supplier via the GSM network. Since the Sunshiny reader is also connected to the Internet, a user can access the stock status via the wireless cellular phone anywhere anytime.

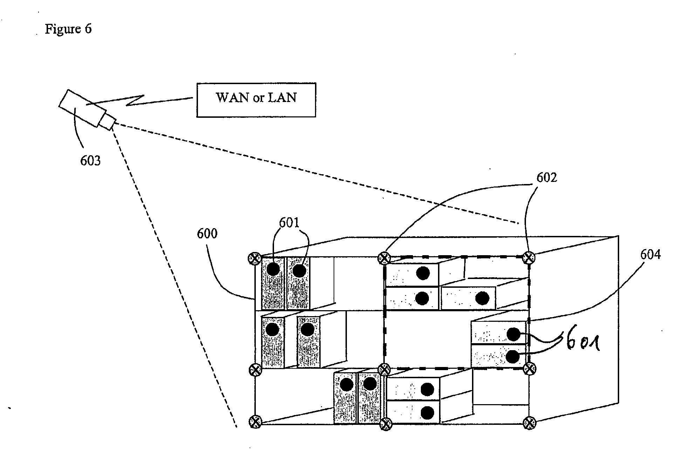

Refering to Figure 6, when the expensive and individually labeled Kanban stocks 601 can be stored on the shelf space 600, then the ceiling-mounted Sunshiny reader 603 needs to view the shelved stocks from an oblique angle. There is however, one practical issue that must be addressed. The Kanban stocks, and thus the Sunshiny patterns 601, can be blocked by a passing worker, or by a worker removing or replenishing the stock. A simple solution to this problem is to check the short-term history of the recognized stocks. If a stock is not detected continuously for a fixed amount of time, then it is considered removed. To prevent the situation when a worker accidentally leaves a large object in front of the Kanban shelf for a long time, many small non-coded Sunshiny patterns, such as type R1_D0, can be attached on the fixed frame of the shelf. Since these patterns cannot be removed, any no-detection of these makers for an extended period indicates blocking by a stationary object. A warning message can be issued to dispatch a worker to remove the blocking object.

In some factory, it is desirable to associate a process state (or other information) to the Kanban stocks without manually inputting the information into the database (or ERP system). An example is that some components are meant for repair and some for regular production. In this case, another type of the Sunshiny pattern can be used for this process lablelling. Referring to Figure 6, if we use R3_D12 patterns 601 (indicated by black dots) to label the Kanban stocks, we can use R2_D4 patterns 602 (gray dots with cross) to label the process state. These R2_D4 patterns 602 are placed at the corners of the compartments of the shelf. Because the center of the R2_D4 patterns are extracted by the reader, a region 604 bounded by four R2_D4s (dashed rectangle) can be determined to correspond to every compartment on the shelf. At least three patterns are necessary to define an area. Furthermore, if we use a convention that the code of the upper-right R2_D4 corresponds to the process state of all Kanban stocks placed in this compartment, then the process state information can be immediately fed into the ERP system when a worker loads a stock into this compartment. In essence, the R2_D4 pattern functions as a "barcodable space-partition marker". To be flexible, this space-partition marker can be made out of a rectangular color card with the usual black and white Sunshiny at the center. The color code is for easy recognition by the workers. These cards can then be hanged at the appropriate corners of the shelf to configure the compartments, as well as changing the process state of the compartments anytime.

As can be seen from the previous explanation, we use three types of Sunshiny patterns for different functions, taking advantages of the power of the sunshiny reader that provides more information than just the coded data. One can imagine that the users will develop many different usages of these patterns in the real applications.

For Kanban stocks that are inexpensive (e.g. computer keyboards), or small items like screws and nuts ("jellybean" items), it is impractical to attach coded Sunshiny to each component individually. Usually these components are either stored in a specially designed container or stacked on the shelf space. For these stocks, we use a "reverse identification" technique to monitor them. In this method, we label the "background" with Sunshiny patterns instead of labeling the components. We call this kind of Sunshiny a "reverse Sunshiny" marking. When a component is present, it blocks the view of the background Sunshiny, therefore prevents the detection of this particular pattern. On the other hand, if the component is removed, then the background Sunshiny is exposed and detected by the reader. Because the component is identified by the reverse Sunshiny in the background, the factory needs to enforce the rule that the same type of containers or stocks is loaded to the same location. Therefore it is useful to use a visual color code so that workers can easily follow the rule.

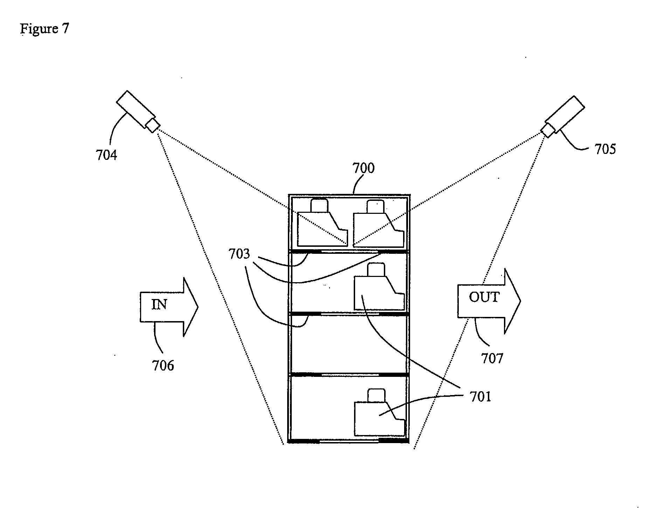

In the case of the container-based Kanban, the containers 701 themselves are stored in the buffer shelf 700, as shown in Figure 7. Each container holds a varying number of the components. If multipurpose containers are used, a useful technique is to paint the containers in different color so that the worker can identify the container easily. During production, the assembly worker consumes the containers from the OUT side 707 of the buffer shelf 700 and the supplier replenishes the containers with filled components from the IN side 706 of the buffer shelf 700. The empty containers can flow within the factory, between factories and also are sent to the supplier.

Figure 7 shows a side view of the container-based dual-buffer shelf 700. As can be imagined, there are multiple rows of these containers on multiple shelves, all monitored by one Sunshiny reader simultaneously. The reverse coded Sunshiny patterns 703 are attached on the bottom of each shelf rack, one for each container space. If multiple container spaces are allocated for the same type of component, then the reverse Sunshiny patterns on those spaces have the same code.

Depending on the factory requirement, the container buffer shelf 700 can be monitored by a Sunshiny reader 705 mounterd on the ceilling from the OUT side 707 of the shelf or a Sunshiny reader 704 from the IN side 706 of the shelf, or both. The system can count how many reverse Sunshiny patterns with the same code are present or how many are not, and then it can derive the status of the containers. For a shelf with a buffer size greater than two, it is impossible for the camera to see the containers (and reverse Sunshiny) in between. Thus this type of buffer shelf cannot be monitored. In this situation where a large stock size of the same container is needed, the solution is to use multiple rows for containers that hold the same components.

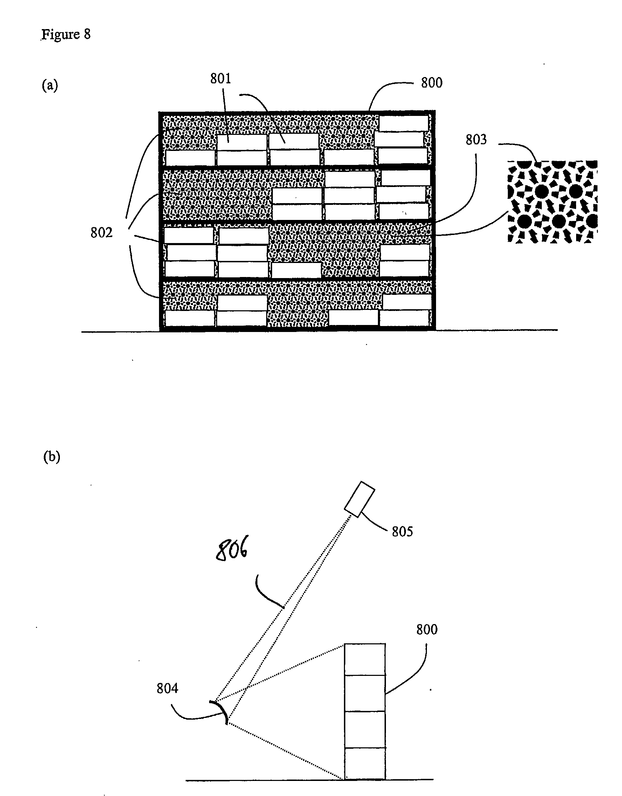

Finally, the shelf-space Kanban is explained. Referring to Figure 8(a) which shows the front view of the shelf 800, the components 801 are stacked in the compartments 802 of the shelf 800. The goal is to monitor the shelf to get a rough estimate of the number of the components 801 remaining in the compartments. It is possible that many compartments hold the same components. What makes the counting possible is to attach a sheet 803 with dense-packed hexagonal array of R1_D0 (or R2_D0) Sunshiny patterns 803 on the back panel of the shelf 800. Again we use the "reverse counting" method. By counting the number of the detected Sunshiny, we can get an estimate of the empty space, thus an estimate of the number of the components, if the size of the component is known.

To assign an ID number to different type of component in different compartment, the same "barcodable space-partition" Sunshiny markers shown in Figure 6 can be used. These partition markers define the compartment regions as well as the ID for the components in the associated compartment.

There are two issues related to this solution. First, due to the perspective of the camera, either the shelf racks or the top surface of the components can block some reverse Sunshiny patterns on the back panel. To suppress the perspective effect, a telephoto lens (or a telecentric lens) can be used. Depending on the size and depth of the shelf, the error introduced can be compensated (systematic error) so that the effective error is acceptable. The second concern is the position of the camera. To minimize the perspective effect, the camera should be installed at a height the same as the middle height of the shelf. However, at this position, the camera will interfere with the workers' activity. One solution is to have the Sunshiny reader 805 view the shelf 800 via a small non-planar, stainless steel mirror 804, as shown in Figure 8(b). Here, the mirror has a convex mirror surface. The convexness of the mirror reduces the size of the mirror. However, it also introduces distortion to the image. This distortion is all right since the detection algorithm can tolerate the image distortion. The stainless steel mirror has been used on roads for traffic safety and sometimes they can be seen in factories also for the same safety reason.

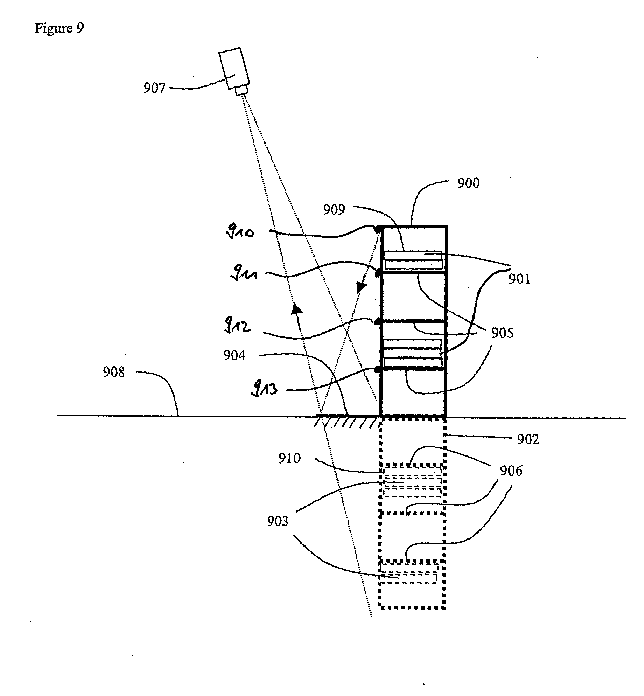

Another embodiment to estimate the status of the shelf-space Kanban is to compare the intensity difference between the components and a constant background. Referring to Figure 9, a mirror 904 (e.g., a stainless steel mirror) with a slightly larger width than the width of the shelf is placed on the floor 908 behind the shelf 900. The Sunshiny reader 907, mounted on the ceilling, views the mirrored image 902 of the back side of the real shelf 900 through this mirror 904. The back side of the shelf is completely open. The real stacked components 901 then become the virtual components 903. The compartments within the shelf are equipped with Sunshiny markers which identify the compartments within the shelf in the same way as is described in conjunction with Figure 6. In Figure 9, four partition markers 910, 911, 912, 913 are used to identify the four racks of the shelf.

If the undersides 905 of the real shelf racks are painted black, then what the Sunshiny reader 907 sees are the virtual black undersides 906 and the back surfaces 910 of the virtual components 903. Through the mirror image, the top surface 909 of the components, which confuses the evaluation of the vacant space, is no longer visible. When the back surface 910 of the components has a luminance that is sufficiently different from the blackness of the undersides 905, then the area occupied by the components can be computed by a simple thresholding of the image intensity. With proper correction for the prespective transformation of the imaging system and knowing the size of the components, the number of the components in the compartments can be estimated. When the components have a black color, the shelf undersides 905 can be painted white. The same "barcodable space-partition marker" shown in Figure 6 can be used to define the image region where the computation of the area is performed and identify the ID of the componenets stored in the shelf.

The advantage of the method described in Figure 9 compared to that of Figure 8 is that the former method does not have the problem associated with the presepctive and the computation of the space occupied by the stacked components is more precise. To prevent the components from falling through the back side of the shelf, a wire mesh can be installed on the back. Sine the wire is thin, it will not affect the computation of the empty space. The dust accumulated on the mirror also does not affect the result.

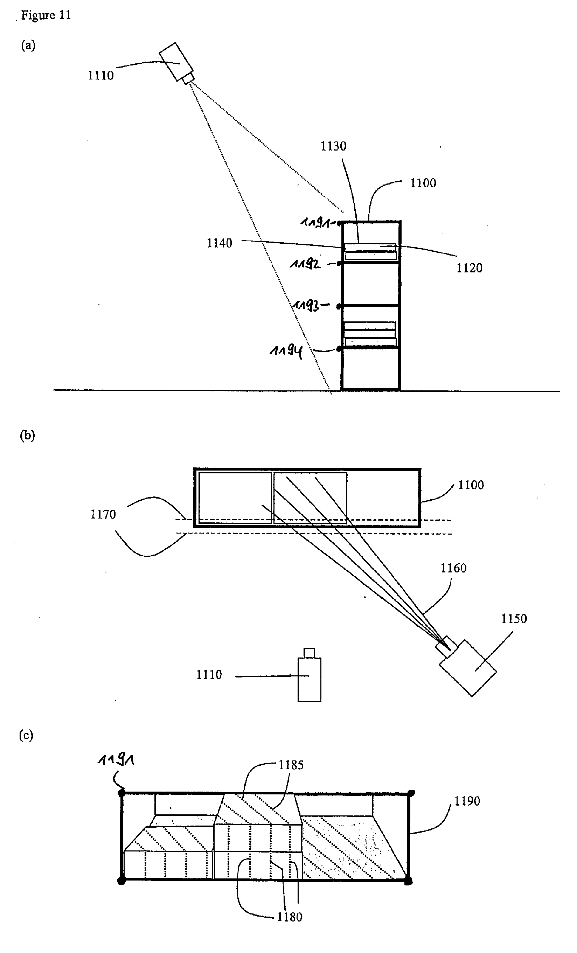

A third embodiment for the shelf-space Kanban is to use depth information. This solution eliminates the use of the mirror completely. Instead, the status of the shelf-based Kanban is estimated using light-stripe illumination. Referring to Figure 11(a), the camera 1110 is mounted on the ceilling and looking at the front side of the shelf 1100 from an angle. In order to estimate the area of the components in the shelf, we need to count only the front surface 1140 of the component 1120, but not the top surface 1130 if the component is on the top of the stack. Because the color of the component on the top surface 1130 and the front surface 1140 most likely will be the same, using the intensity image is not enough. We need to use the depth information to distinguish which part is the top surface and which part is the front surface in the image. One way to provide the depth information is to project a light stripe onto the shelf. This is shown in Figure 11(b), which is a top view of Figure 11(a) with an added light stripe projector 1150 or other similar projection device. The triangulation method of using light stripe to acquire 3D information of the object is well known. In the present invention, we use this triangulation method to exclude the top surface of the components to estimate the count of the components in the shelf. Refering to Figure 11(b), multiple vertically oriented light stripes 1160 from a light projector mounted on the ceilling are projected onto the scene from an angle. Refering to Figure 11(c), these vertical light stripes will appear also as vertical lines 1180 in the image of the camera if the stripes are illuminated on the front surface of the components. However, they will bend at an angle 1185 in the image of the camera if the light stripes are illuminated on the top surface of the components. By counting only the vertical line segements of the light stripes in the camera image, we can estimate the area of the front surfaces of the components. Essentially we only measure the front surfaces of the components within a depth as indicated by two lines 1170 in Figure 11(b). Besides light stripes, it is also possible to project a two-dimensional array of Infrared LEDs onto the scene and use a camera that passes only infrared light to obtain an infrared-only image. Another approach to acquire a good infrared light stripe image is to take the difference of two consecutively captured images, one captured with the illumination from the infrared light stripe projection and another one captured when the infrared illumination is off. To make sure that we only compute the front surfaces of the components within the shelf area, the same "barcodable space-partition marker" shown in Figure 6 can be used to define the image region and also identifies the ID of the components stored in the shelf.

In summary, by judicious placement of the Sunshiny patterns and the Sunshiny readers, various type of Kanban stocks can be monitored continuously without human intervention and without any change to the existing production processes. When the real-time monitoring data is tied into the ERP system, not only can the inventory be minimized, the quality of the supplier can also be evaluated constantly. The Kanban stocks can also be consigned goods from the suppliers so that the factory only gets billed when the Kanban stocks leave the Kanban area, thus further frees up the working capital. By completing the whole loop with no human gap, the entire process can be constantly optimized and fine-tuned, from the supplier to the finished product, even to the servicing chain. The return of investment can be very short.

### 5. Application: Optical Local Positioning System for Pallet Localization

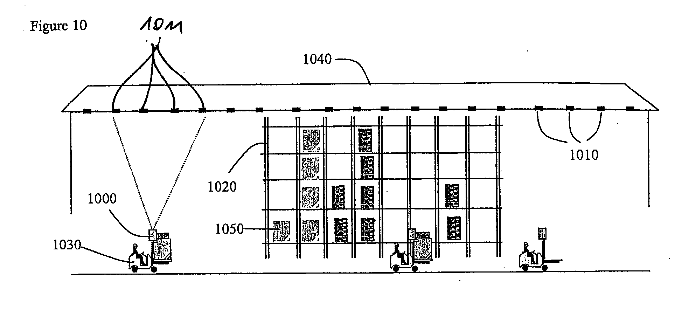

Referring to Figure 10, in a large warehouse 1040, goods that are packaged in pallets 1050 are moved to the shelf space 1020 several stories high by forklift trucks 1030 operated by workers. These pallets can be moved in, moved out or relocated within the warehouse. In a large and busy warehouse which occupies tens of thousands of meters, the number of the lift trucks can be as high as 50. It is desirable to know the location of every pallet without extra work imposed on the workers. One solution is to attach a GPS receiver on each lift truck and track the location of all lift trucks. However, a GPS system does not work indoor because the satellites are not in the line of sight. An alternative is to use a differential GPS system. However, this solution is very expensive.

The Sunshiny markers offers a very inexpensive solution by setting up a so-called "Optical Local Positioning System" (OLPS) which is in contrast to the Radio-based Global Positioning System, in the warehouse. The concept is to use the Sunshiny patterns like the navigation stars. Many coded Sunshiny patterns 1010 are placed on the ceiling of the warehouse and an upward-looking Sunshiny reader 1000 is installed on the lifting arm of each lift truck. The reader is installed on the lifting arm because the 3-D location of the pallet is associated with the lift arm, not the truck. The Sunshiny patterns 1010 are placed at regular spacing so that no matter where the truck moves in the warehouse, at least 2 to 3 patterns are within the line of sight of the truck-mounted reader. By knowing the locations of all coded Sunshiny (which are determined during an initial calibration procedure), the location of every lift truck, or more precisely the location of the lifting arm or the pallet, can be computed using triangulation. Since all Sunshiny patterns are uniquely coded, there is no confusion on which one is in the field of view.

To know the location of the individual pallet, we assume that there is some kind of conventional 1-D barcode on the pallet. On each lift truck, we install another image based 1-D barcode reader looking forward. This conventional barcode reader can locate and read any 1-D barcode within the field of view without aligning the reader with the barcode label. The invention described in US Patent Application 20020084330 [Ref 1] can perform this function exactly. When the truck starts the attach procedure to lift the pallet, the ID on the pallet is read by the forward-looking barcode reader. When the truck moves to a new location and as soon as the detach procedure starts, the upward-looking Sunshiny reader determines the 3-D location of the lift arm. This way the pallet's new location is associated with the pallet ID. The information is then sent to a database via the wireless link. The worker does not need to know anything about the OLPS while all pallets are tracked automatically.

The OPLS system described above can be used for many indoor navigation applications. The Sunshiny patterns can be posted on walls, ceiling, etc. Because the reader can recognize patterns even when the viewing angle is large, the chance that multiple Sunshiny patterns are recognized in one image is greatly improved. This OPLS can be installed inside the nursery home or private residence for elderly or handicapped persons on the motorized wheel chair. It can also be used in the factory for automated guided vehicles. In the case of hospitals, the OPLS can be used to track the location of mobile medical equipment, which are lost frequently.

### 6. Application: Security Monitoring

The Sunshiny pattern can be attached to any valuable or important object and monitored by the Sunshiny reader for various security purposes. For example, US military has stockpiles of chemical and gas munitions in many army depots. It is important to make sure that these items do not fall into the hands of the terrorists. The same is true for weapon-grade radiation material. Because the Sunshiny system can monitor multiple labeled objects spread over a large area, it can be a low-cost solution to this kind of security monitoring applications. The same image view is recorded consecutively from the same position of the camera. A dislocation or rotation of a pattern is detected, when consecutive images are compared to each other. Furthermore the Sunshiny reader can detect a small change of the rotation of the Sunshiny pattern, any tampering with the pattern can be detected immediately. In some applications where privacy is an issue, the monitoring system can be configured to provide only textual data without any knowledge or recording about the scene.

### 7. Application: Motion tracking and Measurement

There are many motion tracking and measurement systems currently in the market. They are used to analyze the motion of an athlete for training or a person for 3-D animation of characters in the movies. These systems use a video camera to track the motion of many LEDs attached to the suit worn by the person. The technique is reliable except when the motion is too complicated so that the trace of a LED messes up with that of other LEDs. If the LEDs are replaced by coded Sunshiny patterns, not only there is no need to supply the power to Sunshiny patterns, there will be no confusion about the correspondence of every Sunshiny pattern. The system also provides measurement data on the tilt angle and the in-plane rotation of the patterns. These extra data may be useful for the applications since it measures local movement of the body.

For example, first and second images are captured and recorded at consecutive time instances. The images represent the space at consecutive time instances. In each of the recorded images the Sunshiny patterns are detected and each Sunshiny pattern of the first image is associated with a corresponding Sunshiny pattern in the second image. This matching is enabled by detecting the barcode in the outer rings of the pattern. When two Sunshiny patterns in consecutive images are dislocated from each other, it is determined that a movement has taken place during the time between the two recording time instances. A movement in-between is obtained by interpolation.

The Sunshiny-based motion tracking and measurement system is especially good for applications where the region to be measured is large. Consider an imaginary case where one would like to measure the speed and vortices of the water flow of a river. Small floats with coded Sunshiny patterns can be released from the river upstream and their motions recorded by a video camera. By analyzing the consecutively recorded images frame by frame with the Sunshiny reading algorithm, a complete picture of the water movement in the river can be easily obtained.

### 8. Application: Photogrammetry and 3-D CAD System

Photogrammetry is a measuring technique that allows modeling a 3-D space using images taken from an existing structure, such as a house or a power plant. By creating a 3-D model of an existing structure, modifications to the structure can be visualized, studied or simulated in the computer before the construction actually begins.

There are many measurement techniques developed for photogrammetry. One of the methods uses passive markers posted at many locations of the structure. Images are then taken from various directions using a digital camera. Because of the complexity of the scene, the markers need to be designed properly so that the software can detect them. Furthermore each maker should have a unique ID so that the software can identify the same 3-D points which may appear in multiple images. Some prior art, for example US patent 6,246,412 [Ref. 7] uses interactive input from a user to construct the 3-D model. The "barcodable landmark system" offered by the Sunshiny patterns and Sunshiny reader is ideally suited for this kind of applications because: 1) the reader can recongize Sunshiny markers in very complex environment 2) every marker has a unique code so that correspondance of 3-D points from different images can be established automatically, 3) a wide field of view can be covered by an image, and 4) the reader can recognize Sunshiny markers oriented at a large oblique angle.

### 9. Application: Self-service Checkout in Retail Stores

Unfortunately the Sunshiny system was invented only recently. Consider the situation that if all goods in the retail stores are labeled with the Sunshiny patterns instead of UPS barcodes. In this case, self-service checkout stations can be installed in stores to speed up the checkout process. A customer only needs to place the goods on the conveyor for the Sunshiny readers to identify all goods instead of the need to have the customer bring the good one by one to a laser barcode scanner. Several Sunshiny readers mounted at different locations may be needed to make sure that the pattern is read by at least one reader.

### References

1. US Patent Application 20020084330: "Method and apparatus of reading a bar code" by Ming-Yee Chiu.
2. US Patent Application 20020067855: "Method and arrangement for camera calibration" by Ming-Yee Chiu and Remi Depommier
3. US Patent 5,637,849: "Maxicode data extraction using spatial domain features" by Ynjium P. Wang and Angi Ye
4. US Patent 6,088,482: "Technique for reading two dimensional code, including Maxicode" by Duanfeng He, Kevin Hunter, and Eugene Joseph.
5. M. Pilu, A. Fitzgibbon, R. Fisher "Ellipse-specific Direct least-square Fitting", IEEE International Conference on Image Processing, Lausanne, September 1996. Available also at http://vision.dai.ed.ac.uk/ElliFitDemo/demo.html
6. See
   http://www.orau.com/ptp/articlesstories/radwarnsymbstory.htm
7. US Patent: 6,246,412: "Interactive construction and refinement of 3D models from multiple panoramic images" by Heung-Yeung Shum; Mei Han; and Richard S. Szeliski;

## Claims

1. A method of detecting the presence of at least two figures (601, 602) in a space, said figures comprising a first portion (107) having a continuous circular shape and a second portion (108) surrounding said first portion (107), said second portion having a multitude of radial line segments (107), the method comprising the steps of:
recording a digitized image (200) of the space;
extracting edge points (106) of the image (201);
performing a Hough Transform on the edge points of the image to obtain a Hough Transform plane (105, 202);
detecting at least two vote peaks in the Hough Transform plane (203);
associating each one of said at least two vote peaks to a corresponding elliptic continuous shape (460, 204);
obtaining an intensity profile (206) of the image along an elliptic path (260) defined by said elliptic shape (460); and
decoding a digital information provided by contrast edges determined in said intensity profile.

2. The method according to claim 1, further comprising the step of obtaining a respective intensity image in the vicinity of the at least two vote peaks and determining information defining the location and orientation of the elliptic shape (204).

3. The method according to claim 1 or 2, further comprising the step of decoding (207, ..., 212) information from the relation between the distances of the contrast edges.

4. The method according to any of claims 1 to 3, comprising the step of determining the largest run-width (120, 160) of the intensity profile and using the largest run-width as a reference (140, 150, 160) for the step of decoding the digital information contained in the intensity profile.

5. The method according to any of claims 1 to 4, wherein the step of associating comprises the step of determining if each one of said at least two vote peaks is located in the corresponding elliptic continuous shape (460, 204).

6. The method according to any of claims 1 to 5, wherein said at least two figures comprise at least one fixed figure (602) which defines a reference location in the space and at least one mobile figure (601), the method further comprising the step of determining the presence of the mobile figure (601) within an area (604) defined with respect to the at least one fixed figure.

7. The method according to claim 6, wherein at least three fixed figures (602) define the contours of an area (604), the method further comprising the step of determining the presence or absence of the mobile figure (601) within said area (604).

8. The method according to any of claims 1 to 7, wherein said step of recording a digitized image comprises the step of arranging a non-planar mirror (804) into the light path (806) between a camera (805) and the figures.

9. The method according to one of claims 1 to 8, comprising the step of providing a multitude of fixed figures (1010); associating a position to each one of the fixed figures (1010) ;
mounting the camera (1000) on a vehicle (1030); and
determining a position of the vehicle (1030) independent of the information decoded from a subset (1011) of the figures contained in the image captured by the camera (1000).

10. The method according to claim 9, wherein the step of determining comprises a step of triangulation.

11. The method according to any of claims 1 to 5, wherein said image is a first image, comprising the steps of recording a second digitized image of the space representing the space at a later time instance;
detecting the figures in the first image and in the second image;
associating the figures of the first image with corresponding figures of the second image; and
determining a difference of one of rotation and location between figures associated with each other.

12. The method according to claim 11, comprising the step of determining a motion of figures associated which each other established between the time instances when the first and second images have been recorded.

13. The method according to any of claims 1 to 12, wherein said at least one of said figures comprises a third portion (111) surrounding said second portion (108) and having a multitude of radial line segments (111), further comprising the step of obtaining an intensity profile of the image along another elliptic path (471) defined by said elliptic shape along said third portion and decoding a digital information contained in said third portion.

14. The method according to any of claims 1 to 8, wherein said at least two figures (910, ..., 913, 1199, ..., 1194) are fixed within said space and each define a respective area;
the method further comprising the step of calculating the intensity of the image within the respective area.

15. The method according to any of claims 1 to 8, wherein said at least two figures (910, ..., 913, 1191, ..., 1194) are fixed within the space and each define a respective area; the method further comprising the step of projecting light stripes (1180) into the space and counting line segments having a predefined parallel orientation to each other within the respective areas.

16. The method according to claim 15, comprising the steps of illuminating the respective area with infrared light stripes and capturing at least two images at consecutive time instances, a first image being captured when said infrared light stripes are being projected and a second image being captured when said infrared light stripes are switched off.

17. A method of managing a stock of components (601) arranged in a space which carry at least one of said figures (601), comprising the steps of any of the claims 1 to 8 and further comprising the steps of:
counting the number of figures detected in an image;
issuing a signal when the counted number exceeds a threshold value; wherein in dependence of said signal additional components are to be added to the space to refill the stock.

18. A method of managing a stock of components (701, 801) arranged in a space wherein a multitude of figures (703, 802, 803) is arranged on a sidewall placed within said space comprising the steps of any of the claims a 1 to 8 and further comprising the steps of:
counting the number of figures detected in an image;
issuing a signal when the counted number is larger than a threshold value; wherein in dependence of said signal additional components are to be added to the space to refill the stock.

19. The method according to claim 18, wherein said sidewall is a sidewall of a container (700, 800) containing said components (701, 801).

20. The method according to claim 18, wherein said sidewall is a rack of a shelf (700), wherein said shelf (700) is designed to accommodate containers (701) which contain the components.

21. A method of determining the local position of a mobile object in a space having a readable identification, comprising the steps of claim 9 or 10 and comprising the step of transporting the object by said vehicle (1030);
reading said identification of said object;
determining the position of said vehicle (1030) at the location where said object is loaded onto said vehicle; and
determining the position of said vehicle (1030) where the object is unloaded off the vehicle.

22. The method according to claim 21, comprising the step of transmitting the identification and the determined positions to a host device through a communication channel.
